(19) Europäisches Patentamt
European Patent Office
Office européen des brevets

(11) **EP 3 994 043 B1**

(12) **EUROPEAN PATENT SPECIFICATION**

(45) Date of publication and mention
of the grant of the patent:
**22.04.2026 Bulletin 2026/17**

(21) Application number: **19739934.8**

(22) Date of filing: **01.07.2019**

(51) International Patent Classification (IPC):
**B60W 30/12** *(2020.01)*  **B60W 50/00** *(2006.01)*
**G06V 20/56** *(2022.01)*

(52) Cooperative Patent Classification (CPC):
**B60W 30/12; G06V 20/588;** B60W 2050/0075;
B60W 2552/05; B60W 2552/53; B60W 2554/00;
B60W 2554/801; B60W 2556/20; B60W 2556/45;
B60W 2556/50; B60W 2556/55; B60W 2556/65

(86) International application number:
**PCT/EP2019/067630**

(87) International publication number:
**WO 2021/001018 (07.01.2021 Gazette 2021/01)**

(54) **SOURCED LATERAL OFFSET FOR ADAS OR AD FEATURES**

GEWONNENER SEITLICHER VERSATZ FÜR ADAS- ODER AD-FUNKTIONEN

DÉCALAGE LATÉRAL OBTENU POUR DES CARACTÉRISTIQUES ADAS OU AD

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.05.2022 Bulletin 2022/19**

(73) Proprietor: **Zenuity AB**
**413 46 Göteborg (SE)**

(72) Inventors:
• **DAHLBÄCK, Anders**
**438 36 Landvetter (SE)**

• **WRANNE, Staffan**
**435 43 Pixbo (SE)**

(74) Representative: **Zacco Sweden AB**
**P.O. Box 5581**
**Löjtnantsgatan 21**
**114 85 Stockholm (SE)**

(56) References cited:
EP-A1- 2 012 211      EP-A1- 3 121 761
EP-A1- 3 217 374      EP-A1- 3 489 899
DE-A1- 102009 046 699   DE-A1- 102010 048 760
JP-A- 2007 004 655

**Description**

<u>TECHNICAL FIELD</u>

The present invention relates to the field of autonomous drive (AD) and advanced driver assistance systems (ADAS). More specifically, the present invention relates to methods and control devices for determining lateral offsets (relative to a road boundary) for traced road references and thereby a road boundary representation for a vehicle positioned on a road.

<u>BACKGROUND</u>

During these last few years, the development of autonomous vehicles has exploded and many different solutions are being explored. Today, development is ongoing in both autonomous driving (AD) and advanced driver-assistance systems (ADAS), i.e. semiautonomous driving, within a number of different technical areas within these fields. One such area is how to position the vehicle with accuracy and consistency since this is an important safety aspect when the vehicle is moving within traffic.

Road departures are a critical issue in both AD and ADAS systems and proper solutions to mitigate the risk of road departures are of utmost importance, moreover, road edge interventions are a part of EuroNCAP Lane Support System (LSS) rating. Generally, lane support systems are classified in two subcategories lane departure warning and lane keep assist, which are designed to assist and warn drivers when one unintentionally leaves the road lane or when one changes lanes without indication.

However, all lane support systems or any other steering system, precise and reliable detection of the road geometry is a key function. Conventional solutions are based on the idea of tracking a road reference (e.g. a lane marking) and adding an offset in order to estimate a location of the road edge relative to the vehicle. More specifically, currently known solutions include logics for first deciding what reference to use (left lane markings, right lane markings, other landmarks, other vehicles, etc.) and if tracking of the selected reference was lost during an intervention the intervention would be aborted, or a swap to another reference had to be performed (which would require more logics). Not only is there a safety risk involved with aborting an intervention or forcing the LSS to switch to a different reference, but the user experience is also impaired.

In view of upcoming stricter requirements for Lane Support Systems, and the general objective in the automotive industry for providing reliable, robust and cost effective solutions there is a need for new and improved solutions which mitigate the problems associated with currently known systems for road boundary tracking.

EP2012211 relates to a surroundings monitoring system for monitoring the surroundings of a vehicle comprising a radar being arranged to detect a road boundary within a radar zone, said radar zone being positioned a head of said vehicle, a shoulder edge determination unit arranged to determine a lateral position of a shoulder edge based on the detected road boundary, a vehicle position determination unit being arranged to determine a lateral position of the vehicle with respect to the shoulder edge.

EP3121761 relates to a system for verifying host vehicle road position information includes a first camera, a second camera, and a controller in communication with the first and second cameras. The control logic includes a control logic for correlating and combining the first and second lane distance estimates to generate a combined lane distance estimate, and for calibrating the first camera to the combined lane distance estimate.

DE102009046699 relates to a driving support ECU comprising a roadside object detecting section for detecting a roadside object (GL) in a case where a lane marking (WR) on at least one of the right side and the left side is detected and an information output section for determining a deviation from the lane on which the vehicle (VC) is traveling based on the estimated position of the lane marker (VL1) on the other of the right side and the left side.

EP3217374 relates to a method performed by a boundary estimation system on-board a vehicle for estimating a boundary of a road on which the vehicle is positioned. The boundary estimation system approximates a relative lateral offset between a geometrical representation of a lane marking and the detected road boundary, and defines a fictive outer boundary of at least a section of the road.

EP3489899 relates to an image processing device that includes a scale correction unit. In a case where a difference between a width of a lane calculated by a lane-width calculation unit and a width of the lane acquired from map data is greater than a predetermined value that serves as a criterion for correcting errors, the scale correction unit corrects a correlation between a length of a subject in a captured image and the number of pixels constituting the captured image.

JP2007004655A relates to a map information update method and a navigation device. In the navigation device, the road width of a road being passed is measured and compared with a road width of map information, and when it is different from each other, the road width of the map information is updated to the measured road width. Namely, a front view including a traveling vehicle is photographed by a camera, a vehicle width detection part determines the vehicle width Lc of the preceding vehicle, a road width calculation part calculates a road width LR using the ratio of vehicle width to road width in the photographed image (e.g., the ratio of pixel number of vehicle width to pixel number of road width) and the vehicle width Lc, and a road width change update processing part compares this road width with the road width of the map information, and updates, when it is different from each other, the road width of the map information to the calculated road width.

SUMMARY OF THE INVENTION

It is therefore an object of the present invention to provide a method for controlling a driver-assistance or autonomous driving feature based on a road model of a portion of a surrounding environment of a vehicle, , corresponding computer-readable storage media, a control device, and a vehicle, which alleviate all or at least some of the drawbacks of presently known systems.

In more detail, it is an object of the present invention to provide a robust and reliable solution for tracking a road edge suitable for implementation in lane support systems for autonomous and semi-autonomous vehicles.

These and other objects are achieved by means of a method for controlling a driver-assistance or autonomous driving feature based on a road model of a portion of a surrounding environment of a vehicle, , a control device, and a vehicle, and a vehicle as defined in the appended claims. The term exemplary is in the present context to be understood as serving as an instance, example or illustration.

The invention is set out in the appended set of claims.

The presented method discussed provides an efficient means for verifying a road boundary representation of an in-vehicle system by comparing sensor data with reference data in real-time in order to reduce the risk of accidental road departures or erroneous interventions by vehicle safety systems due to inaccurate road boundary tracing. The inaccuracies may for example be caused by inaccurate or corrupt sensor data. The lateral distance from the traced road reference (e.g. lane marking) and the road boundary (e.g. road edge) may also be referred to as a "lateral offset" of the traced road reference. Stated differently, the "perceived" lateral distance is compared with a reference value (which can be stored locally or remotely in the "cloud"), in order to verify the vehicle's own sensor readings and then control an AD or ADAS feature (e.g. a road departure mitigation system) based on the verification result. Rendering in increased availability and reliability for road edge tracking in ADAS and AD systems.

The term obtaining is herein to be interpreted broadly and encompasses receiving, retrieving, collecting, acquiring, and so forth. A road boundary is in the present context to be understood as an edge portion of the road and may in some contexts be referred to as a road edge. Nevertheless, a road boundary may in some exemplary embodiments be a road edge, a barrier, a curb, a ditch, or any other structure defining the edge portion of a drivable surface (i.e. the road). Spatial information about the road reference or the road boundary may for example include data of the road reference or the road boundary required to estimate a tracing or tracking of that road reference or road boundary. A road reference is to be understood as a reference feature that can be used to estimate a geometry of the road in reference to the vehicle. The road reference may for example be a left lane marker, a right lane marker, a guidepost, a vehicle, a road boundary (i.e. the left road edge may be used to estimate the position of the right road edge), and so forth.

The present inventors realized that in order to increase availability and reliability of for example lane tracing solutions one can utilize measurements made by other vehicles which have been uploaded to the "cloud" to verify the vehicle's own estimations. In more detail, the present inventors realized that the lateral offset in lane tracing models (i.e. lateral distance from a traced reference to a road boundary) is a parameter needed for road modelling that is prone to measurement errors. The measurement errors can originate from environmental factors (e.g. snow covered road edges) or due to hardware malfunctions. Thus, by providing means for verifying measurements based on measurements made by other vehicles in the same geographical area, simple and effective means for verifying the lane tracing systems are readily achievable.

In accordance with an exemplary embodiment, the ADAS or AD feature is not suppressed, but instead the "reference value", i.e. the second lateral distance is used as an input parameter instead based on a corresponding confidence test. In more detail, and in accordance with another exemplary embodiment of the present invention, the method further comprises comparing the assigned confidence value with a predefined confidence threshold, and obtaining the corresponding second lateral distance between the road reference and the road boundary. Further, the step of controlling the driver-assistance or autonomous driving feature comprises applying the obtained second lateral distance as a control parameter for the driver-assistance or autonomous driving feature if one of the following conditions are true. Either, if the comparison between the determined first lateral distance and the corresponding second lateral distance indicates that a difference between the determined first lateral distance and the obtained second lateral distance is above a first predefined threshold, or if the assigned confidence value for the determined first lateral distance is below the predefined confidence threshold.

Still further, according to yet another exemplary embodiment, the method further comprises sending the obtained geographical position of the vehicle and each first lateral distance to a remote entity, and the step of obtaining the comparison comprises receiving, from the remote entity, the comparison between the first lateral distance and the corresponding second lateral distance. The term remote entity is to be interpreted broadly in the present context, and encompasses any suitable remote system capable of processing data, as well as transmitting and receiving data to and from remote clients (e.g. vehicles).

However, the processing of data, i.e. the comparison between the first and second lateral distances may also be performed locally in the vehicle. Thus, in accordance with yet another exemplary embodiment the method further comprises sending the obtained geographical position of the vehicle to a remote entity, and receiving, from the remote entity, the corresponding second lateral distance between the road reference and the road boundary based on the vehicle's geographical position. Thus, the step of obtaining the comparison comprises (locally) comparing the first lateral distance with the corresponding second lateral distance.

The reference data may also be comprised by a local data repository (e.g. saved as a layer in a locally stored HD map). Thus, according to yet another exemplary embodiment of the present invention, the method further comprises receiving, from a local data repository, the corresponding second lateral distance between the road reference and the road boundary based on the geographical position of the vehicle. Thus, the step of obtaining the comparison comprises (locally) comparing each first lateral distance with the corresponding second lateral distance.

It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the present invention will in the following be further clarified with reference to the embodiments described hereinafter.

BRIEF DESCRIPTION OF THE DRAWINGS

Further objects, features and advantages of embodiments of the invention will appear from the following detailed description, reference being made to the accompanying drawings, in which:

Fig. 1 is schematic flow chart representation of a method for controlling a driver-assistance or autonomous driving feature based on a road model of a portion of a surrounding environment of a vehicle in accordance with the present invention.

Fig. 2 is schematic flow chart representation of sub-process of a method for controlling a driver-assistance or autonomous driving feature based on a road model of a portion of a surrounding environment of a vehicle in accordance with an embodiment of the present invention.

Fig. 3 is schematic flow chart representation of sub-process of a method for controlling a driver-assistance or autonomous driving feature based on a road model of a portion of a surrounding environment of a vehicle in accordance with an embodiment of the present invention.

Fig. 4 is a schematic side-view illustration of a vehicle comprising a control device for controlling a driver-assistance or autonomous driving feature based on a road model of a portion of a surrounding environment of a vehicle in accordance with an embodiment of the present invention.

Fig. 5 is a series of schematic perspective view of a vehicle comprising a control device for providing a road model of a portion of a surrounding environment of a vehicle in accordance with an embodiment of the present invention.

DETAILED DESCRIPTION

Those skilled in the art will appreciate that the steps, services and functions explained herein may be implemented using individual hardware circuitry, using software functioning in conjunction with a programmed microprocessor or general purpose computer, using one or more Application Specific Integrated Circuits (ASICs) and/or using one or more Digital Signal Processors (DSPs). It will also be appreciated that when the present invention is described in terms of a method, it may also be embodied in one or more processors and one or more memories coupled to the one or more processors, wherein the one or more memories store one or more programs that perform the steps, services and functions disclosed herein when executed by the one or more processors.

In the following description of exemplary embodiments, the same reference numerals denote the same or similar components.

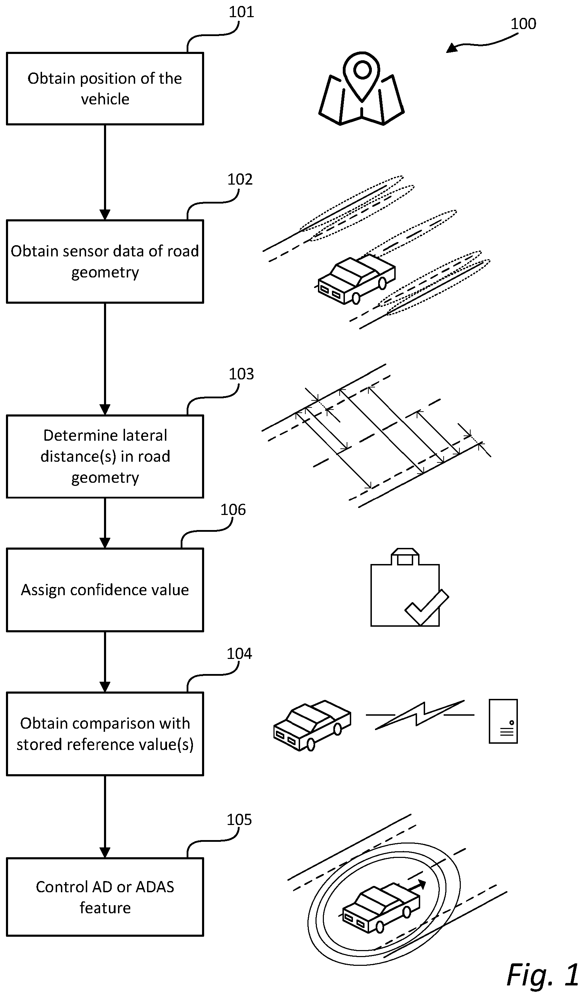

Fig. 1 is a schematic flow chart representation of a method 100 for controlling a driver-assistance or autonomous driving feature based on a road model of a portion of a surrounding environment of a vehicle. Fig. 1 also includes schematic drawings to the right of each box 101-106, where the boxes represent various steps of the method and the drawings serve to supportively illustrate the various method steps. A road boundary is in the present context to be understood as an edge portion of the road and in may some contexts be referred to as a road edge. Nevertheless, a road boundary may in some exemplary embodiments be a road edge, a barrier, a curb, a ditch, or any other structure defining the edge portion of a drivable surface (i.e. the road). A road model may be understood as a representation of a drivable path in a surrounding environment of the vehicle, where the road model comprises lane tracing and road boundary tracing features. The term obtaining is herein to be interpreted broadly and encompasses receiving, retrieving, collecting, acquiring, and so forth.

The method comprises obtaining 101 a geographical position of the vehicle from a localization system of the vehicle. The localization system may be in the form of a Global Navigation Satellite System (GNSS), such as e.g. GPS, GLONASS, Beidou, Galileo, etc. However, the localization system may alternatively or additionally utilize other techniques such as odometry, Kalman filtering, particle filtering, Simultaneous Localization and Mapping (SLAM), or Real Time Kinematics (RTK). In more detail, the localization system may include a wireless communications device, such as a GPS. In one embodiment the vehicle receives a GPS satellite signal. As is understood, the GPS processes the GPS satellite signal to determine positional information (such as location, speed, acceleration, yaw, and direction, etc.) of the vehicle. As noted herein, the localization system is in communication with a control device, and is capable of transmitting such positional information regarding the vehicle to the controller control device.

The method 100 further comprises a step of obtaining 102 sensor data comprising spatial information about a road reference and a road boundary located in the surrounding environment of the vehicle. Spatial information about the road reference may for example include data of the road reference required to estimate a tracing or tracking of that road reference. Thus, the spatial information about the road reference can include positional data of the road reference in relation to a vehicle coordinate system or any other suitable coordinate system (e.g. GPS-coordinates). Stated differently, spatial information about the road reference may be understood as one or more parameters used in forming a road reference model as will be discussed in more detail in the following.

A perception system is in the present context to be understood as a system responsible for acquiring raw sensor data from on sensors such as cameras, LIDARs and RADARs, ultrasonic sensors, and converting this raw data into scene understanding. Naturally, the sensor data may be received 102 directly from one or more suitable sensors (such as e.g. cameras, LIDAR sensors, radars, ultrasonic sensors, etc.). A road reference is to be understood as a reference feature which can be used to estimate a geometry of the road in reference to the vehicle. The road reference may for example be a left lane marker, a right lane marker, a guidepost, a vehicle, a road boundary (i.e. the left road edge may be used to estimate the position of the right road edge), and so forth.

In reference to the road boundary being a "road reference", this can for example be the case in a scenario where the vehicle is traveling on a small rural road, without any other available road references. Then, in order to estimate the position of the right road boundary, one can use the left road boundary, and thereby estimate the width of the road in order to enable/disable certain AD or ADAS features (e.g. autonomous overtaking). Stated differently, one can verify the position of one road boundary based on the position of the other road boundary. Thus, if for example only the left road boundary is available locally (i.e. detectable by the vehicle's sensors), then the lateral distance between the left road boundary and the right road boundary can be stored and retrieved from the "cloud".

Moving on, the sensor data may comprise one or more detections of (e.g. images) of one or more road references. Moreover, a reference representation model can be formed for each road reference based on the received sensor data, the model can for example be in the form of a third order polynomial equation:

$$y_i = A_i x^3 + B_i x^2 + C_i x + D_i \qquad (1)$$

where i denotes the index of the road reference (e.g. left lane markers, right lane markers, a road edge, guideposts, other vehicles, etc.). The polynomial equation (1) describes a geometry of the associated road reference (e.g. lane marking) in the vehicle coordinate system. An alternative reference representation model is to describe the road reference geometry with a clothoid having a lateral offset ($\Delta L$) from the road boundary/edge, a heading ($\alpha$), a curvature ($c_0$), and a curvature rate ($c_1$). However, the road reference geometry modelled as a clothoid can be approximated by the following third order polynomial:

$$y(x) = \frac{c_1}{6} x^3 + \frac{c_0}{2} x^2 + \alpha x + \Delta L \qquad (2)$$

Thus, the reference components $A_i$, $B_i$, $C_i$, and $D_i$ can be considered to represent a curvature rate, a curvature, a heading, and a lateral offset to the road boundary, respectively.

Accordingly, the sensor data can be said to comprise information about a reference representation model of one or more road references in the surrounding environment of the vehicle.

Further, the method 100 comprises determining 103 a first lateral distance between the observed road reference and the observed road boundary. In other words, the step of determining the first lateral distance be understood as determining the reference component $D_i$ (i.e. the lateral offset) for the road reference "i" in relation to the road boundary. If the road reference is a road boundary (e.g. road edge), then this step can be construed as an estimation of the width of the road. The method 100 further comprises a step of assigning 106 a confidence value to the determined 103 first lateral distance based on one or more predefined conditions. For example, the one or more predefined conditions may be environmental conditions (water, debris, snow on the road surface) may result in a reduced reliability of sensor measurements. Thus, the predefined condition may relate to the observation of the road reference and/or of the road boundary. The predefined condition may additionally or alternatively relate to sensor error margins, vehicle movement, and so forth.

Moving on, the method 100 comprises obtaining 104 a comparison between the determined first lateral distance and a corresponding second lateral distance between the (corresponding) road reference and the road boundary based on the obtained position of the vehicle. The second lateral distance is a stored reference distance. This step 104 may be understood as a verification of the observed/detected first lateral distance based on a stored reference distance that is assumed to constitute a "true value". The reference distance may either be stored locally in the vehicle (e.g. as a layer in HD map data) or remotely and accessible via an external network (e.g. stored in a cloud solution). Thus, the comparison may be performed locally by an in-vehicle system or remotely in the "cloud", in reference to the latter, the method may comprise uploading the sensor data may accordingly to the cloud. Moreover, the method 100 may comprise a step of obtaining (e.g. receiving from a remote data repository) the corresponding second lateral distance. This may for example be the case if the reference data (i.e. sourced lateral distances) is stored remotely but the comparison is performed locally.

According to an exemplary embodiment, the obtained sensor data includes at least one of a road reference type and a road reference identification (reference ID) for the identified/monitored road reference. For example, the sensor data may indicate that the identified/road reference is the left lane marker of the rightmost lane of the road segment that the vehicle is currently traveling on. Road reference type may be construed as a parameter describing the type of road reference (e.g. lane marker, guidepost, traffic sign, guard rail, etc.) while the road reference ID is more specific (e.g. right lane marker of the second lane from the right, or the left lane marker in the leftmost lane). This can be advantageous in order to facilitate the comparison between the measured lateral distance and the corresponding reference lateral distance (i.e. second lateral distance) so that the appropriate distances are compared. In other words, the determination of a road reference ID or road reference type serves to aid the comparing entity by classifying the available road reference so that the measured lateral distance between e.g. the right lane marker and the road boundary is compared with the stored reference distance between the right lane marker and the road boundary. Thus, the obtained 104 comparison is advantageously further based on at least one of the road reference type and the road reference ID.

Moreover, the method 100 may comprise receiving a reference ID of the stored reference data, i.e. which road reference's lateral offset relative to which road boundary that is comprised in the data repository (e.g. in the cloud). Accordingly, the obtained sensor data may be based on the received reference ID of the stored reference data. In more detail, the "vehicle" may track a road reference based on which reference data is available in that particular situation at that particular location. For example, if the data repository only contains reference data (i.e. stored lateral distances) for the left lane marker relative to the right road boundary, then the vehicle's perception system may be controlled to mainly focus on the left lane marker in order to measure the first lateral distance between the lateral lane marker and the right road boundary.

Furthermore, the obtained sensor data may further comprise (additional) road reference data such as e.g. whether the lane marker is solid or dashed, single or double, colour of the lane marker, type of lane marker (e.g. painted line or Bott's dot). Similarly, if the road reference is a road boundary the (additional) road reference data may further comprise a road boundary type (e.g. sidewalk, gravel, snow) or type of guardrail (e.g. concrete wall, wire railing, etc.). Furthermore, the sensor data may comprise meta data such as e.g. which sensor was used to detect the road reference, type of sensor used to detect the road reference, light conditions, weather information (rainfall, snowfall, temperature, humidity, etc.).

Next, a driver assistance feature or autonomous driving feature (i.e. an ADAS or AD feature) is controlled 105 based on the comparison. For example, the comparison may show that the first lateral distance deviates from the second lateral distance, which may be used as an indication that a diagnostic test of the vehicle's perception system should be initiated and AD or ADAS features relying on accurate lateral distance observations may be suppressed. Additionally, or alternatively, if a "local" measurement of the lateral distance that deviates from the "reference" lateral distance (i.e. second lateral distance) one can refrain from updating the "local" model of the road geometry in the associated time step. However, if the comparison 104 indicates that the determined 103 first lateral distance is within a confidence range, the AD or ADAS feature(s) may use the determined lateral distance (which has now been verified) as a control parameter, and the overall road safety can be improved.

The above discussed method 100 serves a purpose of verifying a road boundary representation (e.g. road edge tracing) of an in-vehicle system by comparing sensor data (i.e. a perceived environment) with reference data (i.e. sourced data) in real-time in order to reduce the risk of accidental road departures or erroneous interventions by vehicle safety systems due to inaccurate road edge representations. The lateral distance from a detected road reference (e.g. lane marking) and a detected road boundary (e.g. road edge) is the parameter used as a key parameter in the present invention. In more detail, the "perceived" lateral distance is compared with a reference value (which can be stored locally or remotely in the "cloud"), in order to verify the vehicle's own sensor readings and then control an AD or ADAS feature (e.g. a road departure mitigation system) based on the verification result.

The reference value, i.e. the second lateral distance is a stored reference distance, preferably comprising a plurality of measurements from different vehicles. Thus, the second lateral distance can in some embodiments be in the form of an average value of a plurality of different measurements, where a vehicle having suitable sensors and communication equipment provides each measurement. Each measurement can furthermore be provided with an assigned quality value in order to build the reference distance as a weighted average, where the weights depend on the assigned quality value.

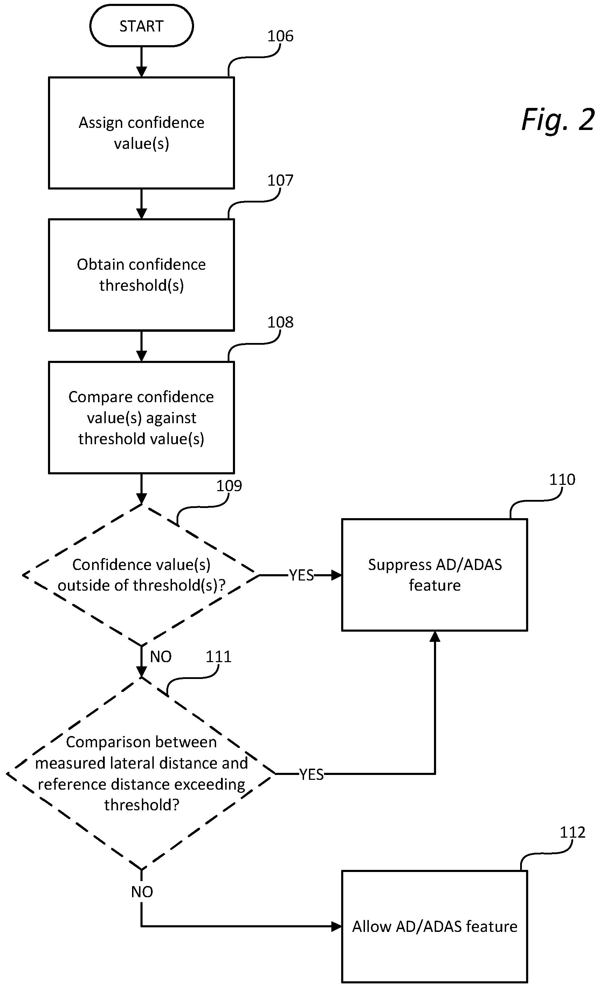

Fig. 2 illustrates a schematic flow chart representation of a sub-process of a method for controlling a driver-assistance or autonomous driving feature based on a road model of a portion of a surrounding environment of a vehicle. Parts of the illustrated sub-process can be construed as an exemplary embodiment of the method discussed in reference to Fig. 1. More specifically, the sub-process illustrated in Fig. 2 includes further method steps related to the step of assigning 106 a confidence value to the measured/determined first lateral distance based on one or more predefined conditions. Accordingly, the method further comprises obtaining 107 one or more confidence thresholds, i.e. threshold values related to the assigned 106 confidence values, and comparing 108 the assigned confidence value(s) to the predefined confidence thresholds. The step of controlling the driver-assistance feature (ADAS feature) or the autonomous driving (AD) feature is accordingly further based on this comparison 108.

In more detail, the method comprises suppressing 110 the ADAS/AD feature if at least one of the two following conditions 109, 111 are true. Namely, if the assigned confidence value for the determined first lateral distance is below the predefined confidence threshold, or if the comparison between the determined first lateral distance and the corresponding second lateral distance indicates that a difference between the determined first lateral distance and the obtained second lateral distance is above a first predefined threshold. In other words, the ADAS/AD feature is suppressed 110 if the reliability of the measurement of the first lateral distance is questionable, or if the comparison with the reference value (second lateral distance) directly shows that the measurement of the first is erroneous. Analogously, the method may comprise a step of allowing 112 the AD/ADAS feature to be activated or stay active if both conditions 109, 111 are fulfilled.

In summary, the method discussed in the foregoing with reference to Fig. 2 adds further robustness to the in-vehicle road edge tracing by verifying 109, 111 the accuracy of the determined first lateral distance in two explicit and independent steps, thereby improving robustness of the road modelling feature of the vehicle.

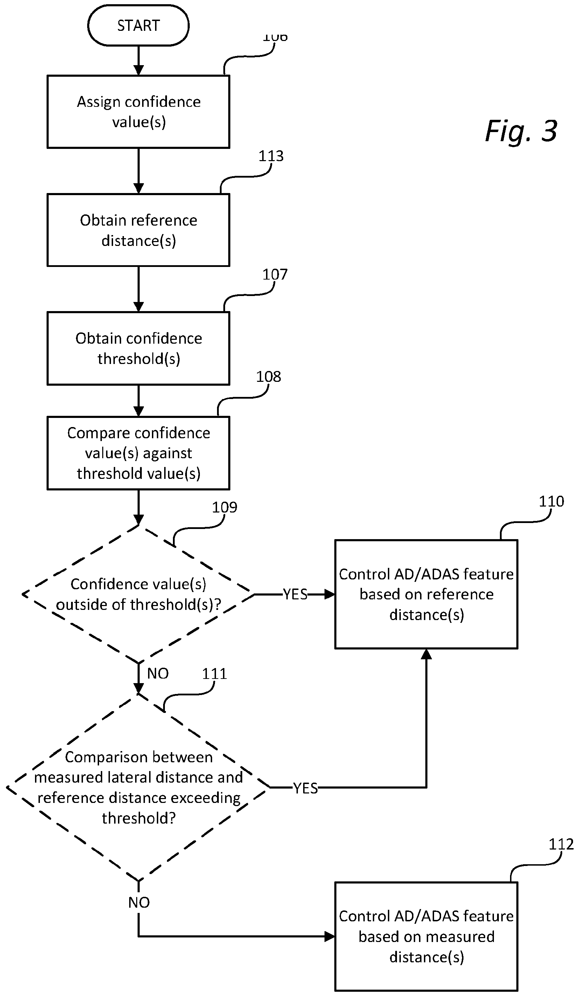

Fig. 3 is another schematic flow chart representation of a sub-process of a method for providing a road model of a portion of a surrounding environment of a vehicle. The illustrated sub-process of Fig. 3 can be construed as an exemplary embodiment of the method discussed in reference to Fig. 1. More specifically, the sub-process illustrated in Fig. 3 includes further method steps related to the step of assigning 106 a confidence value to the measured/determined first lateral distance based on one or more predefined conditions.

Accordingly, the method further comprises obtaining 113 the corresponding one or more second lateral distances as well as obtaining 107 confidence thresholds for the first lateral distances. As mentioned, the term obtaining is herein to be interpreted broadly and encompasses "passively" receiving or "actively" retrieving the confidence thresholds from the perception system, the associated sensors, or determining the confidence thresholds in a separate unit based on a computational model in the separate unit. The confidence thresholds may be dynamic and depend on one or more further parameters such as a geographical location of the vehicle, a vehicle speed, a traffic density, a time of day, etc.

Accordingly, the assigned 106 confidence value(s) are compared 108 against corresponding threshold value(s). Analogously as in the embodiment discussed in reference to Fig. 2, the method includes checking 109, 111 if the confidence value(s) exceed the threshold values, or if the comparison between the determined first lateral distance and the second lateral distance indicates that the first lateral distance is wrong. However, based on these comparisons, the AD/ADAS feature can be controlled 110 based on the obtained 113 second lateral distance, or controlled 112 based on the (now verified) first lateral distance.

In reference to the first alternative, i.e. using the obtained 113 second lateral distance as a control parameter, the step of controlling the ADAS or AD feature then comprises applying the obtained second lateral distance as a control parameter for the driver-assistance or autonomous driving feature at least temporarily. This may for example be useful if the in-vehicle systems cannot estimate the lateral distance between the road reference and a road boundary and thus not generate a reliable road model, and the AD/ADAS feature is provided with the possibility to utilize the stored reference distance temporarily. The obtained 113 second lateral distance can be understood as a stored reference distance and may for example be a sourced distance aggregated from a plurality of measurements made by other vehicles.

Executable instructions for performing the above discussed functions are, optionally, included in a non-transitory computer-readable storage medium or other computer program product configured for execution by one or more processors.

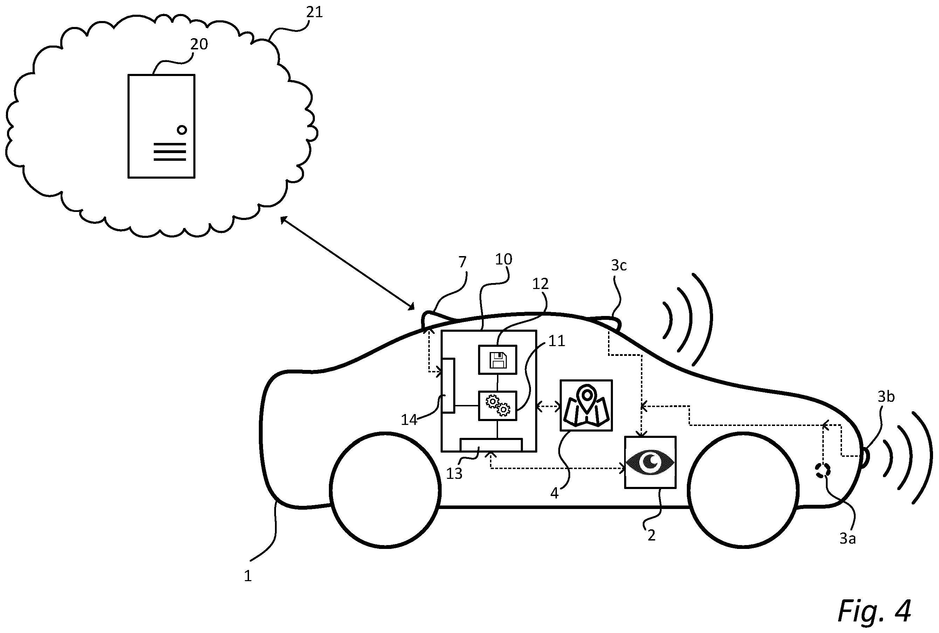

Fig. 4 is a schematic side view of a vehicle 1 comprising a control device 10 for providing a road model of a portion of a surrounding environment of a vehicle. The vehicle 1 further comprises a perception system 2 and a localization system 4. A perception system 2 is in the present context to be understood as a system responsible for acquiring raw sensor data from on sensors 3a, 3b, 3c such as cameras, LIDARs and RADARs, ultrasonic sensors, and converting this raw data into scene understanding. The localization system 4 is configured to monitor a geographical position and heading of the vehicle, and may in the form of a Global Navigation Satellite System (GNSS), such as a GPS, Beidou, Galileo, or GLONASS. Furthermore, the localization system may be realized as a Real Time Kinematics (RTK) GPS in order to improve accuracy.

The perception system 2 comprises a plurality of sensors 3a-3c (e.g. cameras, LIDARs, RADARs, ultrasound transducers, etc.). The sensors 3a-3c are configured to acquire information representative of a surrounding environment of the vehicle. In more detail, the perception system comprises sensors suitable for tracking one or more road references (e.g. lane markings, road edges, other vehicles, landmarks, etc.) in order to estimate a road geometry and in particular a road boundary of the travelled upon road.

The control device 10 comprises one or more processors 11, a memory 12, a sensor interface 13 and a communication interface 14. The processor(s) 11 may also be referred to as a control circuit 11 or control circuitry 11. The control circuit 11 is configured to execute instructions stored in the memory 12 to perform a method for providing a road model of a portion of a surrounding environment of a vehicle according to any one of the embodiments disclosed herein. Stated differently, the memory 12 of the control device 10 can include one or more (non-transitory) computer-readable storage mediums, for storing computer-executable instructions, which, when executed by one or more computer processors 11, for example, can cause the computer processors 11 to perform the techniques described herein. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices.

In more detail, the control circuitry 11 is configured to obtain a geographical position of the vehicle (or data comprising information about a geographical position of the vehicle 1) from the localization 4 of the vehicle 1. The geographical position may be in the form of a set of geographical coordinates (e.g. GPS coordinates) and a heading of the vehicle 1. The control circuitry 11 is further configured to obtain sensor data comprising spatial information about one or more road references (e.g. lane markers) and a road boundary (e.g. road edge) located in the surrounding environment of the vehicle 1. The sensor data may be provided by the perception system 2 of the vehicle. Next, the control circuitry is configured to determine a first lateral distance between each road reference and the road boundary.

Further, the control circuitry 11 is configured to obtain a comparison between each determined first lateral distance and each corresponding second lateral distance between the road reference and the road boundary based on the obtained position and optionally based on the sensor data. The second lateral distance is to be understood as a stored reference distance. In other words, the control circuitry 11 obtains a reference lateral distance between each suitable road reference and a road boundary in the current geographical position of the vehicle. The term obtain is in the present context to be interpreted broadly and encompasses passively receiving, actively retrieving, or receiving upon a request, and any other suitable way to acquire a specific set of data.

Then, the control circuitry 11 is configured to control a driver-assistance or autonomous driving feature based on the comparison between the determined first lateral distance and the corresponding second lateral distance. The term control a driver-assistance feature or autonomous driving feature is considered to encompass both direct control and indirect control (i.e. sending a signal to a different vehicle control system that is directly responsible for executing an AD or ADAS feature).

Further, the vehicle 1 may be connected to external network(s) 21 via for instance a wireless link (e.g. for retrieving map data). The same or some other wireless link may be used to communicate with other vehicles in the vicinity of the vehicle or with local infrastructure elements. Cellular communication technologies may be used for long range communication such as to external networks and if the cellular communication technology used have low latency it may also be used for communication between vehicles, vehicle to vehicle (V2V), and/or vehicle to infrastructure, V2X. Examples of cellular radio technologies are GSM, GPRS, EDGE, LTE, 5G, 5G NR, and so on, also including future cellular solutions. However, in some solutions mid to short range communication technologies are used such as Wireless Local Area (LAN), e.g. IEEE 802.11 based solutions. ETSI is working on cellular standards for vehicle communication and for instance 5G is considered as a suitable solution due to the low latency and efficient handling of high bandwidths and communication channels.

The processor(s) 11 (associated with the control device 10) may be or include any number of hardware components for conducting data or signal processing or for executing computer code stored in memory 12. The device 10 has an associated memory 12, and the memory 12 may be one or more devices for storing data and/or computer code for completing or facilitating the various methods described in the present description. The memory may include volatile memory or non-volatile memory. The memory 12 may include database components, object code components, script components, or any other type of information structure for supporting the various activities of the present description. According to an exemplary embodiment, any distributed or local memory device may be utilized with the systems and methods of this description. According to an exemplary embodiment the memory 12 is communicably connected to the processor 11 (e.g., via a circuit or any other wired, wireless, or network connection) and includes computer code for executing one or more processes described herein.

It should be appreciated that the sensor interface 14 may also provide the possibility to acquire sensor data directly or via dedicated sensor control circuitry 2 in the vehicle. The communication/antenna interface 13 may further provide the possibility to send output to a remote location (e.g. remote operator or control centre) by means of the antenna 7. Moreover, some sensors in the vehicle may communicate with the control device 10 using a local network setup, such as CAN bus, I2C, Ethernet, optical fibres, and so on. The communication interface 13 may be arranged to communicate with other control functions of the vehicle and may thus be seen as control interface also; however, a separate control interface (not shown) may be provided. Local communication within the vehicle may also be of a wireless type with protocols such as WiFi, LoRa, Zigbee, Bluetooth, or similar mid/short range technologies.

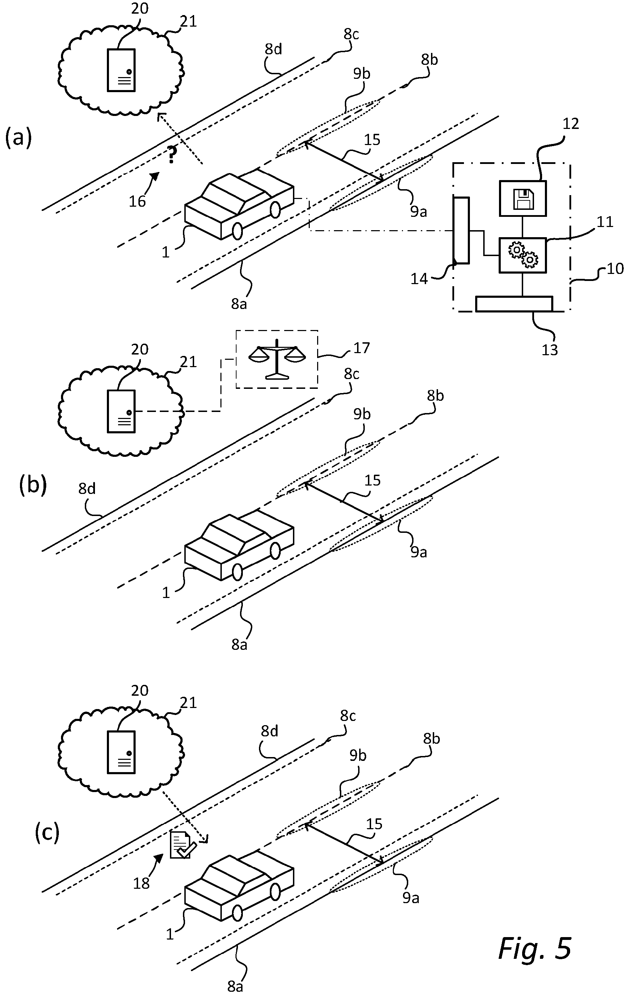

Fig. 5 shows a series of perspective view illustrations (a) - (c) of a vehicle 1 comprising a control device for providing a road model of a portion of a surrounding environment of a vehicle 1. The series of illustrations (a) - (c) serve to elucidate a verification process in which the control device is arranged to monitor the centre lane markers 8b and the right road boundary 8a and to determine a lateral distance 15 between the two. This lateral distance is then compared/verified against a stored reference value (indicated by ref. 17) in order to increase an integrity level of the road boundary tracing. Stated differently, the lateral offset of the traced road reference 8b is verified against a stored "ground truth".

In the top-most illustration, i.e. drawing (a), the control device 10 of the vehicle 1 obtains a geographical position of the vehicle (provided by for example a GPS unit of the vehicle 1), and sensor data. Naturally, the geographical position of the vehicle 1 may be provided by other means such as a real time kinematics (RTK) GPS unit, HD map data in combination with landmark measurements, and so forth. The sensor data comprises spatial information about a road reference 8a - 8d and a road boundary 8a, 8d as indicated by reference numeral 9a, 9b. As previously mentioned, the term road reference encompasses a road boundary/edge since in some situations it may be desirable to determine a lateral distance between two road edges 8a, 8d. The measured lateral distance 15 is then sent to a remote entity 20 via an external network (e.g. cellular network) 21 for verification as indicated by the question mark 16. Even though the verification performed remotely i.e. in the "cloud" in the illustrated embodiment, the verification may alternatively be performed locally in the vehicle 1. In more detail, the vehicle may comprise a local data repository comprising stored "reference distances" e.g. in the form of a layer in an HD map. However, an advantage with the "cloud" solution is that vehicles connected to the same system can regularly update the lateral distances 15, while the local data repository can for example be updated at predefined scenarios (e.g. during service of the vehicle). In the latter embodiment, the control circuit may be configured to retrieve the corresponding second lateral distance, and then verify the measured value 15 by comparing the two distances.

The verification comprises a comparison between the determined first lateral distance 15 and a corresponding second lateral distance (i.e. a stored reference distance) as indicated by reference numeral 17.

In the bottom drawing, i.e. illustration (c), the vehicle 1 receives a verification of the reliability of the determined first lateral distance as indicated by reference numeral 18, and the control device 10 can use the determined first lateral distance 15 as a control parameter for an AD or ADAS feature (such as e.g. a road departure mitigation system). Analogously, if the comparison 17 would have indicated that determined first lateral distance 15 was outside of one or more predefined thresholds, the AD or ADAS feature(s) is suppressed and the driver prompted to take over control of the vehicle 1.

The present invention has been presented above with reference to specific embodiments. However, other embodiments than the above described are possible and within the scope of the invention as claimed in the below described patent claims. Different method steps than those described above, performing the method by hardware or software, may be provided within the scope of the invention as claimed in the below described patent claims. Thus, according to an exemplary embodiment, there is provided a non-transitory computer-readable storage medium storing one or more programs configured to be executed by one or more processors of a vehicle control system, the one or more programs comprising instructions for performing the method according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

In summary, the present invention relates to methods and control devices for controlling a driver-assistance or autonomous driving feature based on a road model of a portion of a surrounding environment of a vehicle. More specifically, the present invention relates to utilizing stored reference data in the form of a lateral offset of a road reference (e.g. lane marker) in relation to a road boundary in order to either verify a local measurement of the lateral offset or to control a driver-assistance or autonomous driving feature directly based on the stored reference data. Additionally, in reference to the latter aspect, the driver-assistance or autonomous driving feature may be controlled based on a fusion of sensor data the obtained stored lateral distance. The present invention also relates to a method for providing verification data for road model estimations.

Accordingly, it should be understood that parts of the described solution may be implemented either in the vehicle, in a system located external the vehicle, or in a combination of internal and external the vehicle; for instance in a server in communication with the vehicle, a so called cloud solution. For instance, sensor data may be sent to an external system and that system performs the steps to compare the sensor data (movement of the other vehicle) with the predefined behaviour model.

It should be noted that the word "comprising" does not exclude the presence of other elements or steps than those listed and the words "a" or "an" preceding an element do not exclude the presence of a plurality of such elements. It should further be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. For example, the steps of receiving signals comprising spatial information about a road reference and a geographical position of the vehicle may be interchanged based on a specific realization. Such variation will depend on the software and hardware systems chosen and on designer choice. Moreover, features or steps may be interchanged between embodiments unless explicitly stated otherwise. Likewise, software implementations could be accomplished with standard programming techniques with rule-based logic and other logic to accomplish the various connection steps, processing steps, comparison steps and decision steps. The above mentioned and described embodiments are only given as examples and should not be limiting to the present invention. Other solutions, uses, objectives, and functions within the scope of the invention as claimed in the below described patent claims should be apparent for the person skilled in the art.

### Claims

1. A method (100) for controlling a driver-assistance or autonomous driving feature based on a road model of a portion of a surrounding environment of a vehicle, the method comprising:

   obtaining (101) a geographical position of the vehicle from a localization system of the vehicle;
   obtaining (102) sensor data comprising spatial information about a road reference and a road boundary located in the surrounding environment of the vehicle;
   determining (103) a first lateral distance between the road reference and the road boundary;
   assigning (106) a confidence value for the determined first lateral distance based on at least one predefined condition;
   comparing (108) the assigned confidence value with a predefined confidence threshold;
   obtaining (104) a comparison between the determined first lateral distance and a corresponding second lateral distance between the corresponding road reference and the road boundary based on the obtained geographical position of the vehicle, the second lateral distance being a stored reference distance;
   controlling (105) a driver-assistance or autonomous driving feature based on the comparison between the determined first lateral distance and the corresponding second lateral distance and further based on the assigned confidence value, wherein the controlling (105) the driver assistance or autonomous driving feature comprises:
   suppressing (110) the driver-assistance or autonomous driving feature if:

   the comparison between the determined first lateral distance and the corresponding second lateral distance indicates that a difference between the determined first lateral distance and the obtained second lateral distance is above a first predefined threshold, or
   the assigned (106) confidence value for the determined first lateral distance is below the predefined confidence threshold.

2. The method (100) according to claim 1, further comprising:

   comparing (107) the assigned (106) confidence value with a predefined confidence threshold;
   obtaining (113) the corresponding second lateral distance between the corresponding road reference and the road boundary;
   wherein the step of controlling (105) the driver-assistance or autonomous driving feature comprises:
   applying (110) the obtained second lateral distance as a control parameter for the driver-assistance or autonomous driving feature if:

   the comparison between the determined first lateral distance and the corresponding second lateral distance indicates that a difference between the determined first lateral distance and the obtained second lateral distance is above a first predefined threshold, or
the assigned (106) confidence value for the determined first lateral distance is below the predefined confidence threshold.

3. The method (100) according to claim 1 or 2, wherein the step of controlling (105) the driver-assistance or autonomous driving feature comprises:
applying (112) the determined first lateral distance as a control parameter for the driver-assistance or autonomous driving feature if:

the comparison between the determined first lateral distance and the corresponding second lateral distance indicates that a difference between the determined first lateral distance and the obtained second lateral distance is below a second predefined threshold, or
the assigned (106) confidence value for the determined first lateral distance is above the predefined confidence threshold..

4. The method (100) according to any one of the preceding claims, wherein the sensor data further comprises at least one of a road reference type and a road reference identification, ID, for the road reference; and
wherein the comparison between the determined first lateral distance and the corresponding second lateral distance is further based on at least one of the road reference type and the road reference ID.

5. The method (100) according to any one of the preceding claims, further comprising:

sending the obtained (101, 102) geographical position of the vehicle and each first lateral distance to a remote entity; and
wherein the step of obtaining (104) the comparison comprises receiving, from the remote entity, the comparison between the first lateral distance and the corresponding second lateral distance.

6. The method (100) according to any one of claims 1 - 4, further comprising:

sending the obtained (101) geographical position of the vehicle to a remote entity;
receiving, from the remote entity, the corresponding second lateral distance between the corresponding road reference and the road boundary;
wherein the step of obtaining the comparison comprises comparing the first lateral distance with the corresponding second lateral distance.

7. The method (100) according to any one of claims 1 - 4, further comprising:

receiving, from a local data repository, the corresponding second lateral distance between the corresponding road reference and the road boundary based on the geographical position of the vehicle; and
wherein the step of obtaining (104) the comparison comprises comparing each first lateral distance with the corresponding second lateral distance.

8. A computer-readable storage medium storing one or more programs configured to be executed by one or more processors of a vehicle control system, the one or more programs comprising instructions for performing the method (100) according to any one of the preceding claims.

9. A control device (10) for controlling a driver-assistance or autonomous driving feature based on a road model of a portion of a surrounding environment of a vehicle (1), the control device (10) comprising control circuitry (11) configured to:

obtain a geographical position of the vehicle from a localization system (4) of the vehicle;
obtain sensor data comprising spatial information about a road reference (8a-8d) and a road boundary (8a, 8d) located in the surrounding environment of the vehicle (1);
determine a first lateral distance (15) between the road reference (8a-8d) and the road boundary (8a, 8d);
assign a confidence value for the determined first lateral distance (15) based on at least one predefined condition;
compare the assigned confidence value to a predefined confidence threshold;
obtain a comparison (17) between the determined first lateral (15) distance and a corresponding second lateral distance between the corresponding road reference and the road boundary based on the obtained geographical position of the vehicle (1), the second lateral distance being a stored reference distance;

control a driver-assistance or autonomous driving feature based on the comparison (17) between the determined first lateral distance (15) and the corresponding second lateral distance and further based on the assigned confidence value, wherein the controlling the driver assistance or autonomous driving feature comprises:

suppressing the driver-assistance or autonomous driving feature if:

the comparison (17) between the determined first lateral distance and the corresponding second lateral distance indicates that a difference between the determined first lateral distance (15) and the obtained second lateral distance is above a first predefined threshold, or

the assigned confidence value for the determined first lateral distance (15) is below the predefined confidence threshold.

10. The control device (11) according to claim 9, wherein the control circuitry (11) is further configured to:

compare the assigned confidence value to a predefined confidence threshold;

obtain the corresponding second lateral distance between the road reference (8a-8d) and the road boundary (8a, 8d);

wherein the control circuitry (11) is configured to control the driver-assistance or autonomous driving feature by:

applying the obtained second lateral distance as a control parameter for the driver-assistance or autonomous driving feature if:

the comparison (17) between the determined first lateral distance (15) and the corresponding second lateral distance indicates that a difference between the determined first lateral distance (15) and the obtained second lateral distance is above a first predefined threshold, or

the assigned confidence value for the determined first lateral distance (15) is below the predefined confidence threshold.

11. A vehicle (1) comprising:

a localization system (4) for monitoring a geographical position of the vehicle;

a perception system (6) comprising at least one sensor (3a-3c) for monitoring a surrounding environment of the vehicle (1);

a control device (10) according to any one of claims 9 - 10.

**Patentansprüche**

1. Verfahren (100) zum Steuern eines Merkmals für Fahrerassistenz oder autonomes Fahren, basierend auf einem Straßenmodell eines Abschnitts einer umliegenden Umgebung eines Fahrzeugs, wobei das Verfahren Folgendes umfasst:

Erlangen (101) einer geografischen Position des Fahrzeugs von einem Lokalisierungssystems des Fahrzeugs;

Erlangen (102) von Sensordaten, die räumliche Informationen über eine Straßenreferenz und eine Straßenbegrenzung, die sich in der umliegenden Umgebung des Fahrzeugs befindet, umfassen;

Bestimmen (103) eines ersten seitlichen Abstands zwischen der Straßenreferenz und der Straßenbegrenzung;

Zuweisen (106) eines Konfidenzwerts für den bestimmten ersten seitlichen Abstand basierend auf mindestens einer vordefinierten Bedingung;

Vergleichen (108) des zugewiesenen Konfidenzwerts mit einem vordefinierten Konfidenzschwellenwert;

Erlangen (104) eines Vergleichs zwischen dem bestimmten ersten seitlichen Abstand und einem entsprechenden zweiten seitlichen Abstand zwischen der entsprechenden Straßenreferenz und der Straßenbegrenzung basierend auf der erlangten geografischen Position des Fahrzeugs, wobei der zweite seitliche Abstand ein gespeicherter Referenzabstand ist;

Steuern (105) eines Merkmals für Fahrerassistenz oder autonomes Fahren basierend auf dem Vergleich zwischen dem bestimmten ersten seitlichen Abstand und dem entsprechenden zweiten seitlichen Abstand und ferner basierend auf dem zugewiesenen Konfidenzwert, wobei das Steuern (105) des Merkmals für Fahrerassistenz oder autonomes Fahren Folgendes umfasst:

Unterdrücken (110) des Merkmals für Fahrerassistenz oder autonomes Fahren, wenn:

der Vergleich zwischen dem bestimmten ersten seitlichen Abstand und dem entsprechenden zweiten seitlichen Abstand anzeigt, dass eine Differenz zwischen dem bestimmten ersten seitlichen Abstand und dem erlangten zweiten seitlichen Abstand oberhalb eines ersten vordefinierten Schwellenwerts liegt, oder der zugewiesene (106) Konfidenzwert für den bestimmten ersten seitlichen Abstand unterhalb des vordefinierten Konfidenzschwellenwerts liegt.

2. Verfahren (100) nach Anspruch 1, ferner umfassend:

Vergleichen (107) des zugewiesenen (106) Konfidenzwerts mit einem vordefinierten Konfidenzschwellenwert;
Erlangen (113) des entsprechenden zweiten seitlichen Abstands zwischen der entsprechenden Straßenreferenz und der Straßenbegrenzung;
wobei der Schritt des Steuerns (105) des Merkmals für Fahrerassistenz oder autonomes Fahren Folgendes umfasst:
Anwenden (110) des erlangten zweiten seitlichen Abstands als einen Steuerparameter für das Merkmal für Fahrerassistenz oder autonomes Fahren, wenn:

der Vergleich zwischen dem bestimmten ersten seitlichen Abstand und dem entsprechenden zweiten seitlichen Abstand anzeigt, dass eine Differenz zwischen dem bestimmten ersten seitlichen Abstand und dem erlangten zweiten seitlichen Abstand oberhalb eines ersten vordefinierten Schwellenwerts liegt, oder der zugewiesene (106) Konfidenzwert für den bestimmten ersten seitlichen Abstand unterhalb des vordefinierten Konfidenzschwellenwerts liegt.

3. Verfahren (100) nach Anspruch 1 oder 2, wobei der Schritt des Steuerns (105) des Merkmals für Fahrerassistenz oder autonomes Fahren Folgendes umfasst:
Anwenden (112) des bestimmten ersten seitlichen Abstands als einen Steuerparameter für das Merkmal für Fahrerassistenz oder autonomes Fahren, wenn:

der Vergleich zwischen dem bestimmten ersten seitlichen Abstand und dem entsprechenden zweiten seitlichen Abstand anzeigt, dass eine Differenz zwischen dem bestimmten ersten seitlichen Abstand und dem erlangten zweiten seitlichen Abstand unterhalb eines zweiten vordefinierten Schwellenwerts liegt, oder der zugewiesene (106) Konfidenzwert für den bestimmten ersten seitlichen Abstand oberhalb des vordefinierten Konfidenzschwellenwerts liegt.

4. Verfahren (100) nach einem der vorhergehenden Ansprüche, wobei die Sensordaten ferner mindestens eines von einem Straßenreferenztyp und einer Straßenreferenzkennung, Straßenreferenz-ID, für die Straßenreferenz umfassen; und wobei der Vergleich zwischen dem bestimmten ersten seitlichen Abstand und dem entsprechenden zweiten seitlichen Abstand ferner auf mindestens einem des Straßenreferenztyps und der Straßenreferenz-ID basiert.

5. Verfahren (100) nach einem der vorhergehenden Ansprüche, ferner umfassend:

Senden der erlangten (101, 102) geografischen Position des Fahrzeugs und jedes ersten seitlichen Abstands an eine entfernte Einheit; und
wobei der Schritt des Erlangens (104) des Vergleichs Empfangen, von der entfernten Einheit, des Vergleichs zwischen dem ersten seitlichen Abstand und dem entsprechenden zweiten seitlichen Abstand umfasst.

6. Verfahren (100) nach einem der Ansprüche 1-4, ferner umfassend:

Senden der erlangten (101) geografischen Position des Fahrzeugs an eine entfernte Einheit;
Empfangen, von der entfernten Einheit, des entsprechenden zweiten seitlichen Abstands zwischen der entsprechenden Straßenreferenz und der Straßenbegrenzung;
wobei der Schritt des Erlangens des Vergleichs Vergleichen des ersten seitlichen Abstands mit dem entsprechenden zweiten seitlichen Abstand umfasst.

7. Verfahren (100) nach einem der Ansprüche 1-4, das ferner Folgendes umfasst:

Empfangen, von einem lokalen Datenspeicher, des entsprechenden zweiten seitlichen Abstands zwischen der entsprechenden Straßenreferenz und der Straßenbegrenzung basierend auf der geografischen Position des

EP 3 994 043 B1

Fahrzeugs; und

wobei der Schritt des Erlangens (104) des Vergleichs Vergleichen jedes ersten seitlichen Abstands mit dem entsprechenden zweiten seitlichen Abstand umfasst.

8. Computerlesbares Speichermedium, das ein oder mehrere Programme speichert, die dazu konfiguriert sind, durch einen oder mehrere Prozessoren eines Fahrzeugsteuersystems ausgeführt zu werden, wobei das eine oder die mehreren Programme Anweisungen zum Durchführen des Verfahrens (100) nach einem der vorhergehenden Ansprüche umfassen.

9. Steuervorrichtung (10) zum Steuern eines Merkmals für Fahrerassistenz oder autonomes Fahren, basierend auf einem Straßenmodell eines Abschnitts einer umliegenden Umgebung eines Fahrzeugs (1), wobei die Steuervorrichtung (10) eine Steuerschaltung (11) umfasst, die zu Folgendem konfiguriert ist:

Erlangen einer geografischen Position des Fahrzeugs von einem Lokalisierungssystems (4) des Fahrzeugs;
Erlangen von Sensordaten, die räumliche Informationen über eine Straßenreferenz (8a-8d) und eine Straßenbegrenzung (8a, 8d), die sich in der umliegenden Umgebung des Fahrzeugs (1) befindet, umfassen;
Bestimmen eines ersten seitlichen Abstands (15) zwischen der Straßenreferenz (8a-8d) und der Straßenbegrenzung (8a, 8d);
Zuweisen eines Konfidenzwerts für den bestimmten ersten seitlichen Abstand (15) basierend auf mindestens einer vordefinierten Bedingung;
Vergleichen des zugewiesenen Konfidenzwerts mit einem vordefinierten Konfidenzschwellenwert;
Erlangen eines Vergleichs (17) zwischen dem bestimmten ersten seitlichen Abstand (15) und einem entsprechenden zweiten seitlichen Abstand zwischen der entsprechenden Straßenreferenz und der Straßenbegrenzung basierend auf der erlangten geografischen Position des Fahrzeugs (1), wobei der zweite seitliche Abstand ein gespeicherter Referenzabstand ist;
Steuern eines Merkmals für Fahrerassistenz oder autonomes Fahren basierend auf dem Vergleich (17) zwischen dem bestimmten ersten seitlichen Abstand (15) und dem entsprechenden zweiten seitlichen Abstand und ferner basierend auf dem zugewiesenen Konfidenzwert, wobei das Steuern des Merkmals für Fahrerassistenz oder autonomes Fahren Folgendes umfasst:
Unterdrücken des Merkmals für Fahrerassistenz oder autonomes Fahren, wenn:

der Vergleich (17) zwischen dem bestimmten ersten seitlichen Abstand und dem entsprechenden zweiten seitlichen Abstand anzeigt, dass eine Differenz zwischen dem bestimmten ersten seitlichen Abstand (15) und dem erlangten zweiten seitlichen Abstand oberhalb eines ersten vordefinierten Schwellenwerts liegt, oder
der zugewiesene Konfidenzwert für den bestimmten ersten seitlichen Abstand (15) unterhalb des vordefinierten Konfidenzschwellenwerts liegt.

10. Steuervorrichtung (11) nach Anspruch 9, wobei die Steuerschaltung (11) ferner zu Folgendem konfiguriert ist:

Vergleichen des zugewiesenen Konfidenzwerts mit einem vordefinierten Konfidenzschwellenwert;
Erlangen des entsprechenden zweiten seitlichen Abstands zwischen der Straßenreferenz (8a-8d) und der Straßenbegrenzung (8a, 8d);
wobei die Steuerschaltung (11) dazu konfiguriert ist, das Merkmal für Fahrerassistenz oder autonomes Fahren durch Folgendes zu steuern:
Anwenden des erlangten zweiten seitlichen Abstands als einen Steuerparameter für das Merkmal für Fahrerassistenz oder autonomes Fahren, wenn:

der Vergleich (17) zwischen dem bestimmten ersten seitlichen Abstand (15) und dem entsprechenden zweiten seitlichen Abstand anzeigt, dass eine Differenz zwischen dem bestimmten ersten seitlichen Abstand (15) und dem erlangten zweiten seitlichen Abstand oberhalb eines ersten vordefinierten Schwellenwerts liegt, oder
der zugewiesene Konfidenzwert für den bestimmten ersten seitlichen Abstand (15) unterhalb des vordefinierten Konfidenzschwellenwerts liegt.

11. Fahrzeug (1), umfassend:

ein Lokalisierungssystem (4) zum Überwachen einer geografischen Position des Fahrzeugs;

14

ein Wahrnehmungssystem (6), umfassend mindestens einen Sensor (3a-3c) zum Überwachen einer umliegenden Umgebung des Fahrzeugs (1);

eine Steuervorrichtung (10) nach einem der Ansprüche 9-10.

**Revendications**

1.  Procédé (100) pour commander une caractéristique d'aide à la conduite ou de conduite autonome sur la base d'un modèle de route d'une partie d'un environnement environnant d'un véhicule, le procédé comprenant :

    l'obtention (101) d'une position géographique du véhicule provenant d'un système de localisation du véhicule ;
    l'obtention (102) de données de capteur comprenant des informations spatiales concernant une référence de route et une limite de route situées dans l'environnement environnant du véhicule ;
    la détermination (103) d'une première distance latérale entre la référence de route et la limite de route ;
    l'attribution (106) d'une valeur de confiance pour la première distance latérale déterminée sur la base d'au moins une condition prédéfinie ;
    la comparaison (108) de la valeur de confiance attribuée avec un seuil de confiance prédéfini ;
    l'obtention (104) d'une comparaison entre la première distance latérale déterminée et une deuxième distance latérale correspondante entre la référence de route correspondante et la limite de route sur la base de la position géographique obtenue du véhicule, la deuxième distance latérale étant une distance de référence stockée ;
    la commande (105) d'une caractéristique d'aide à la conduite ou de conduite autonome sur la base de la comparaison entre la première distance latérale déterminée et la deuxième distance latérale correspondante et en outre sur la base de la valeur de confiance attribuée, dans lequel la commande (105) de la caractéristique d'aide à la conduite ou de conduite autonome comprend :
    la suppression (110) de la caractéristique d'aide à la conduite ou de conduite autonome si :

        la comparaison entre la première distance latérale déterminée et la deuxième distance latérale correspondante indique qu'une différence entre la première distance latérale déterminée et la deuxième distance latérale obtenue est supérieure à un premier seuil prédéfini, ou
        la valeur de confiance attribuée (106) pour la première distance latérale déterminée est inférieure au seuil de confiance prédéfini.

2.  Procédé (100) selon la revendication 1, comprenant :

    la comparaison (107) de la valeur de confiance attribuée (106) avec un seuil de confiance prédéfini ;
    l'obtention (113) de la deuxième distance latérale correspondante entre la référence de route correspondante et la limite de route ;
    dans lequel l'étape de commande (105) de la caractéristique d'aide à la conduite ou de conduite autonome comprend :
    l'application (110) de la deuxième distance latérale obtenue en tant que paramètre de commande pour la caractéristique d'aide à la conduite ou de conduite autonome si :

        la comparaison entre la première distance latérale déterminée et la deuxième distance latérale correspondante indique qu'une différence entre la première distance latérale déterminée et la deuxième distance latérale obtenue est supérieure à un premier seuil prédéfini, ou
        la valeur de confiance attribuée (106) pour la première distance latérale déterminée est inférieure au seuil de confiance prédéfini.

3.  Procédé (100) selon la revendication 1 ou 2, dans lequel l'étape de commande (105) de la caractéristique d'aide à la conduite ou de conduite autonome comprend :
    l'application (112) de la première distance latérale déterminée en tant que paramètre de commande pour la caractéristique d'aide à la conduite ou de conduite autonome si :

        la comparaison entre la première distance latérale déterminée et la deuxième distance latérale correspondante indique qu'une différence entre la première distance latérale déterminée et la deuxième distance latérale obtenue est inférieure à un deuxième seuil prédéfini, ou
        la valeur de confiance attribuée (106) pour la première distance latérale déterminée est supérieure au seuil de confiance prédéfini.

**4.** Procédé (100) selon l'une quelconque des revendications précédentes, dans lequel les données de capteur comprennent en outre au moins l'un parmi un type de référence de route et une identification, identifiant, de référence de route pour la référence de route ; et

dans lequel la comparaison entre la première distance latérale déterminée et la deuxième distance latérale correspondante est en outre basée sur au moins l'un parmi le type de référence de route et l'identifiant de référence de route.

**5.** Procédé (100) selon l'une quelconque des revendications précédentes, comprenant :

l'envoi de la position géographique obtenue (101, 102) du véhicule et de chaque première distance latérale à une entité distante ; et
dans lequel l'étape d'obtention (104) de la comparaison comprend la réception, provenant de l'entité distante, de la comparaison entre la première distance latérale et la deuxième distance latérale correspondante.

**6.** Procédé (100) selon l'une quelconque des revendications 1 à 4, comprenant :

l'envoi de la position géographique obtenue (101) du véhicule à une entité distante ;
la réception, provenant de l'entité distante, de la deuxième distance latérale correspondante entre la référence de route correspondante et la limite de route ;
dans lequel l'étape d'obtention de la comparaison comprend la comparaison de la première distance latérale avec la deuxième distance latérale correspondante.

**7.** Procédé (100) selon l'une quelconque des revendications 1 à 4, comprenant :

la réception, provenant d'un référentiel de données local, de la deuxième distance latérale correspondante entre la référence de route correspondante et la limite de route sur la base de la position géographique du véhicule ; et
dans lequel l'étape d'obtention (104) de la comparaison comprend la comparaison de chaque première distance latérale avec la deuxième distance latérale correspondante.

**8.** Support de stockage lisible par ordinateur stockant une ou plusieurs programmes configurés pour être exécutés par un ou plusieurs processeurs d'un système de commande de véhicule, les une ou plusieurs programmes comprenant des instructions pour réaliser le procédé (100) selon l'une quelconque des revendications précédentes.

**9.** Dispositif de commande (10) pour commander une caractéristique d'aide à la conduite ou de conduite autonome sur la base d'un modèle de route d'une partie d'un environnement environnant d'un véhicule (1), le dispositif de commande (10) comprenant une circuiterie de commande (11) configurée pour :

obtenir une position géographique du véhicule provenant d'un système de localisation (4) du véhicule ;
obtenir des données de capteur comprenant des informations spatiales concernant une référence de route (8a-8d) et une limite de route (8a, 8d) situées dans l'environnement environnant du véhicule (1) ;
déterminer une première distance latérale (15) entre la référence de route (8a-8d) et la limite de route (8a, 8d) ;
attribuer une valeur de confiance pour la première distance latérale (15) déterminée sur la base d'au moins une condition prédéfinie ;
comparer la valeur de confiance attribuée à un seuil de confiance prédéfini ;
obtenir une comparaison (17) entre la première distance latérale (15) déterminée et une deuxième distance latérale correspondante entre la référence de route correspondante et la limite de route sur la base de la position géographique obtenue du véhicule (1), la deuxième distance latérale étant une distance de référence stockée ;
commander une caractéristique d'aide à la conduite ou de conduite autonome sur la base de la comparaison (17) entre la première distance latérale (15) déterminée et la deuxième distance latérale correspondante et en outre sur la base de la valeur de confiance attribuée, dans lequel la commande de la caractéristique d'aide à la conduite ou de conduite autonome comprend :
la suppression de la caractéristique d'aide à la conduite ou de conduite autonome si :

la comparaison (17) entre la première distance latérale déterminée et la deuxième distance latérale correspondante indique qu'une différence entre la première distance latérale (15) déterminée et la deuxième distance latérale obtenue est supérieure à un premier seuil prédéfini, ou
la valeur de confiance attribuée pour la première distance latérale (15) déterminée est inférieure au seuil de confiance prédéfini.

**10.** Dispositif de commande (11) selon la revendication 9, dans lequel la circuiterie de commande (11) est en outre configurée pour :

comparer la valeur de confiance attribuée à un seuil de confiance prédéfini ;

obtenir la deuxième distance latérale correspondante entre la référence de route (8a-8d) et la limite de route (8a, 8d) ;

dans lequel la circuiterie de commande (11) est configurée pour commander la caractéristique d'aide à la conduite ou de conduite autonome par :

l'application de la deuxième distance latérale obtenue en tant que paramètre de commande pour la caractéristique d'aide à la conduite ou de conduite autonome si :

la comparaison (17) entre la première distance latérale (15) déterminée et la deuxième distance latérale correspondante indique qu'une différence entre la première distance latérale (15) déterminée et la deuxième distance latérale obtenue est supérieure à un premier seuil prédéfini, ou

la valeur de confiance attribuée pour la première distance latérale (15) déterminée est inférieure au seuil de confiance prédéfini.

**11.** Véhicule (1) comprenant :

un système de localisation (4) pour surveiller une position géographique du véhicule ;

un système de perception (6) comprenant au moins un capteur (3a 3c) pour surveiller un environnement environnant du véhicule (1) ;

un dispositif de commande (10) selon l'une quelconque des revendications 9 à 10.

101

Obtain position of the
vehicle

100

102

Obtain sensor data of road
geometry

103

Determine lateral
distance(s) in road
geometry

106

Assign confidence value

104

Obtain comparison with
stored reference value(s)

105

Control AD or ADAS
feature

*Fig. 1*

*Fig. 2*

START

Assign confidence value(s)   106

Obtain confidence threshold(s)   107

Compare confidence value(s) against threshold value(s)   108

Confidence value(s) outside of threshold(s)?   109

— YES → Suppress AD/ADAS feature   110

NO   111

Comparison between measured lateral distance and reference distance exceeding threshold?

— YES →

NO

Allow AD/ADAS feature   112

START

Assign confidence
value(s)

106

Obtain reference
distance(s)

113

Obtain confidence
threshold(s)

107

Compare confidence
value(s) against
threshold value(s)

108

*Fig. 3*

Confidence value(s)
outside of threshold(s)?

109

YES

Control AD/ADAS feature
based on reference
distance(s)

110

NO   111

Comparison between
measured lateral distance and
reference distance exceeding
threshold?

YES

NO

Control AD/ADAS feature
based on measured
distance(s)

112

Fig. 4

*Fig. 5*

**REFERENCES CITED IN THE DESCRIPTION**

**Patent documents cited in the description**

- EP 2012211 A
- EP 3121761 A
- DE 102009046699
- EP 3217374 A
- EP 3489899 A
- JP 2007004655 A